# EUROPEAN PATENT APPLICATION

(11) **EP 4 513 974 A1**
(43) Date of publication of application: **26.02.2025**
(21) Application number: 22937896.3
(22) Date of filing: 21.04.2022
(51) Int. Cl.: H04W 52/00

(54) **RSRP THRESHOLD PARAMETER DETERMINATION METHOD AND APPARATUS, COMMUNICATION DEVICE, AND STORAGE MEDIUM**

(71) Applicant: Beijing Xiaomi Mobile Software Co., Ltd., Beijing 100085 (CN)
(72) Inventor: MU, Qin, Beijing 100085 (CN)
(74) Representative: Gunzelmann, Rainer
(86) International application number: PCT/CN2022/088307
(87) International publication number: WO 2023/201660

(57) **Abstract**

Provided are an RSRP threshold parameter determination method and apparatus, a communication device, and a storage medium. The RSRP threshold parameter determination method is executed by a network device, and comprises determining correction parameters of an RSRP threshold of a first-type UE on the basis of configuration related information of the first-type UE, wherein the first-type UE is a UE of which an antenna structure is reduced with respect to a second-type UE (S21).

## Description

### FIELD

The present invention relates to, but is not limited to, the technical field of radio communication, and more particularly to a method and an apparatus for determining a parameter of a reference signal received power (RSRP) threshold, a communication device, and a storage medium.

### BACKGROUND

In the long term evolution (LTE) system of the fourth generation (4G) mobile communication technology, in order to support Internet of Things (IoT) applications, two major technologies of the machine type communication (MTC) and narrow band Internet of things (NB - IoT) are provided. These two technologies are targeted at relatively low-rate, high-latency scenarios. For example, the NB-IoT device currently only supports a maximum rate of several hundred kbps. For another example, the MTC device currently only supports a maximum rate of a few Mbps. With the development of the Internet of Things applications, such as the popularity of video surveillance, smart home, wearable devices and industrial sensor monitoring, the device for the two technologies usually requires a rate of tens or hundreds Mbps and a relatively high requirement for the time delay. In this way, the MTC and NB-IoT device in the 4G LET cannot meet the requirements of the evolving IoT business.

Currently, a new type of user equipment (UE) is provided to cover mid-range IoT devices. This new type of UE may be a reduced capability (RedCap) UE or a new radio light (NR-lite) UE. This new type of UE usually needs to meet one of the following requirements: low cost, low complexity, a certain degree of coverage enhancement, and power saving. Compared with mid-to-high-end UEs in the NR, an antenna structure of the RedCap UE has been reduced. For UEs with different antenna structures, and/or different frequency ranges, and/or no application scenarios provided, the existing protocol does not provide limitations on how to correct a reference signal received power (RSRP) threshold.

### SUMMARY

Embodiments of the present invention provide a method and apparatus for determining a parameter of an RSRP threshold, a communication device, and a storage medium.

According to a first aspect of embodiments of the present invention, a method for determining a parameter of an RSRP threshold, performed by a network device, is provided. The method includes: determining a bias parameter of an RSRP threshold of a first-type UE according to configuration-related information of the first-type UE, where the first-type UE is a UE of which an antenna structure is reduced with respect to a second-type UE.

According to a second aspect of embodiments of the present invention, a method for determining a parameter of an RSRP threshold, performed by a first-type UE, is provided. The method includes: determining a bias parameter of an RSRP threshold of the first-type UE according to configuration-related information of the first-type UE, where the first-type UE is a UE of which an antenna structure is reduced with respect to a second-type UE.

According to a third aspect of embodiments of the present invention, an apparatus for determining a parameter of an RSRP threshold, applied to a network device, is provided. The apparatus includes: a first processing module configured to determine a bias parameter of an RSRP threshold of a first-type UE according to configuration-related information of the first-type UE, where the first-type UE is a UE of which an antenna structure is reduced with respect to a second-type UE.

According to a fourth aspect of embodiments of the present invention, an apparatus for determining a parameter of an RSRP threshold, applied to a first-type UE, is provided. The apparatus includes: a second processing module configured to determine a bias parameter of an RSRP threshold of a first-type UE according to configuration-related information of the first-type UE, where the first-type UE is a UE of which an antenna structure is reduced with respect to a second-type UE.

According to a fifth aspect of embodiments of the present invention, a communication device is provided, including: a processor; and a memory for storing executable instructions that, when executed by the processor, cause the method for determining the parameter of the RSRP threshold according to any embodiment of the present invention to be implemented.

According to a sixth aspect of embodiments of the present invention, there is provided a computer storage medium having stored therein an executable program that, when executed by a processor, causes the method for determining the parameter of the RSRP threshold of any embodiment of the present invention to be implemented.

The technical solutions provided by the embodiments of the present invention may include the following beneficial effects.

In the embodiments of the present invention, the network device can determine the bias parameter of the RSRP threshold of the first-type UE according to the configuration-related information of the first-type UE. The first-type UE is a UE of which an antenna structure is reduced with respect to the second-type UE. In this way, in the embodiments of the present invention, on the one hand, the bias parameter of the RSRP threshold for the first-type UE with different configuration-related information may be accurately determined, so as to facilitate the first-type UE to determine an appropriate RSRP threshold for the first-type UE according to the bias parameter. On the other hand, a flexible configuration of the bias parameter for the first-type UE with different configuration-related information may be achieved.

It is to be understood that both the foregoing general description and the following detailed description are illustrative and explanatory only and are not intended to limit the embodiments of the present invention.

### BRIEF DESCRIPTION OF THE DRAWINGS

FIG. 1 is a schematic diagram of a wireless communication system according to an illustrative embodiment.
FIG. 2 is a flowchart of a method for determining a parameter of an RSRP threshold according to an illustrative embodiment.
FIG. 3 is a flowchart of a method for determining a parameter of an RSRP threshold according to an illustrative embodiment.
FIG. 4 is a schematic diagram showing a method for determining a parameter of an RSRP threshold according to an illustrative embodiment.
FIG. 5 is a schematic diagram showing a method for determining a parameter of an RSRP threshold according to an illustrative embodiment.
FIG. 6 is a flowchart of a method for determining a parameter of an RSRP threshold according to an illustrative embodiment.
FIG. 7 is a flowchart of a method for determining a parameter of an RSRP threshold according to an illustrative embodiment.
FIG. 8 is a schematic diagram of an apparatus for determining a parameter of an RSRP threshold according to an illustrative embodiment.
FIG. 9 is a schematic diagram of an apparatus for determining a parameter of an RSRP threshold according to an illustrative embodiment.
FIG. 10 is a block diagram of a UE according to an illustrative embodiment.
FIG. 11 is a block diagram of a base station according to an illustrative embodiment.

### DETAILED DESCRIPTION

Reference will now be made in detail to illustrative embodiments, examples of which are illustrated in the accompanying drawings. The following description refers to the accompanying drawings in which the same numbers in different drawings represent the same or similar elements unless otherwise represented. The implementations set forth in the following description of illustrative embodiments do not represent all implementations consistent with the present invention. They are merely examples of apparatuses and methods consistent with some aspects of the present invention as recited in the appended claims.

Terms used in the embodiments of the present invention are only for the purpose of describing specific embodiments, and shall not be construed to limit the present invention. As used in the embodiments of the present invention and the appended claims, "a/an" and "the" in a singular form are intended to include plural forms, unless clearly indicated in the context otherwise. It should be understood that, the term "and/or" used herein represents and contains any one of associated listed items and all possible combinations of more than one associated listed items.

It should be understood that terms such as "first," "second" and "third" may be used in the embodiments of the present invention for describing various information, these information should not be limited by these terms. These terms are only used for distinguishing information of the same type from others. For example, first information may also be referred to as second information, and similarly, the second information may also be referred to as the first information, without departing from the scope of the embodiments of the present invention. As used herein, the term "if" may be construed to mean "when" or "upon" or "in response to determining" depending on the context.

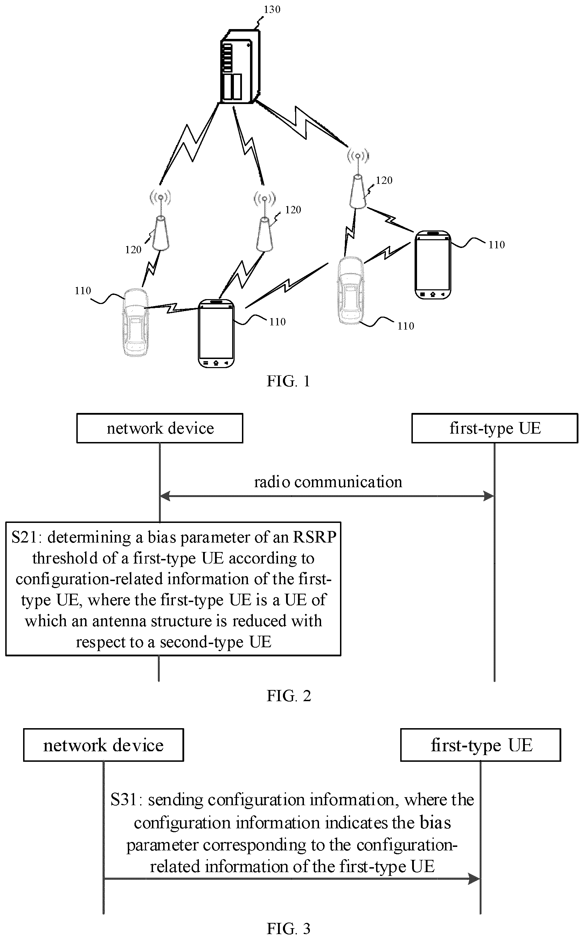

Referring to FIG. 1, a schematic diagram of a wireless communication system according to an illustrative embodiment, as shown in FIG. 1, the wireless communication system is a communication system based on cellular mobile communication technology, and the wireless communication system may include several UEs 110 and several base stations 120.

A UE 110 may be a device that provides voice and/or data connectivity to a user. The UE 110 can communicate with one or more core networks via a radio access network (RAN), and the UE 110 may be an Internet of Things (IoT) UE, such as a sensor device, a mobile phone (or called a "cellular" phone) and a computer including an IoT UE. For example, the UE 110 may be a fixed device, a portable device, a pocket device, a hand-held device, a computer built-in device or a vehicle-mounted device. For example, the UE 110 may be a station (STA), a subscriber unit, a subscriber station, a mobile station, a mobile, a remote station, an access point, a remote UE, an access UE, a user terminal, a user agent, a user device, or a user equipment. Alternatively, the UE 110 may also be a device of an unmanned aerial vehicle. Alternatively, the UE 110 may also be a vehicle-mounted device, for example, it may be a trip computer with a wireless communication function, or a wireless communication device connected externally to the trip computer. Alternatively, the UE 110 may also be a roadside device, for example, it may be a street lamp, a signal lamp, or other roadside devices with a wireless communication function.

The base station 120 may be a network device in the wireless communication system. The wireless communication system may be the 4th generation (4G) mobile communication system, also known as a long term evolution (LTE) system, or the wireless communication system may be a 5G system, also called a new radio (NR) system or 5G NR system. Alternatively, the wireless communication system may be a next-generation system of the 5G system. An access network in the 5G system is called new generation-radio access network (NG-RAN). Alternatively, it may be a machine type communication (MTC) system.

The base station 120 may be an evolved node B (eNB) in a 4G system. Alternatively, the base station 120 may be a next-generation node B (gNB) adopting a centralized and distributed architecture in the 5G system. When the base station 120 adopts the centralized and distributed architecture, it generally includes a central unit (CU) and at least two distributed units (DU). The centralized unit is provided with a protocol stack of a packet data convergence protocol (PDCP) layer, a radio link control (RLC) layer, a media access control (MAC) layer. The distributed unit is provided with a physical (PHY) layer protocol stack. The specific implementation of the base station 120 is not limited in the embodiments of the present invention.

A wireless connection can be established between the base station 120 and the UE 110 through a wireless radio interface. In different embodiments, the wireless radio interface is a wireless radio interface based on the fourth generation (4G) mobile communication network technology standard; or the wireless radio interface is a wireless radio interface based on the fifth generation (5G) mobile communication network technology standard, such as a new radio interface; or the wireless radio interface is a wireless radio interface based on a next-generation (from 5G) mobile communication network technology standard.

In some embodiments, an end-to-end (E2E) connection is established between the UEs 110, for example, vehicle to everything (V2X) communication, such as vehicle to vehicle (V2V) communication, vehicle to infrastructure (V2I) communication and vehicle to pedestrian (V2P) communication.

Here, the UE described above may be a terminal device in the embodiments described below.

In some embodiments, the above wireless communication system may further include a network management device 130.

Several base stations 120 are respectively connected to the network management device 130. The network management device 130 may be a core network device in the wireless communication system, for example, the network management device 130 may be a mobility management entity (MME) in an evolved packet core (EPC) network. Alternatively, the network management device may be other core network devices, such as a serving gateway (SGW), a public data network gateway (PGW), a policy and charging rule function (PCRF) unit or a home subscriber server (HSS), etc. The implementation form of the network management device 130 is not limited in the embodiments of the present invention.

In order to facilitate understanding for those skilled in the art, multiple implementations are provided to clearly describe the technical solution of the embodiments of the present invention. Those skilled in the art can understand that the multiple implementations provided for the embodiments of the present invention may be executed alone or in combination with the methods of other embodiments of the present invention. The embodiments executed alone or in combination may further be executed together with some methods of other related technologies, which are not limited in the embodiments of the present invention.

In order to better understand the technical solution described in any embodiment of the present invention, a partial explanation of the RSRP threshold in related technologies is provided firstly.

In some embodiments, the NR system defines a reference signal received power (RSRP) based on synchronization signal block (SSB) and channel state information-reference signal (CSI-RS). For example, in the random access procedure or beam recovery, the following RSRP threshold is defined: a reference signal received power threshold of a synchronization signal block (rsrp-ThresholdSSB); a reference signal received power threshold of channel state information-reference signal (rsrp-ThresholdCSI-RS); a reference signal received power threshold of a super uplink synchronization signal block (rsrp-ThresholdSSB-SUL); a reference signal received power threshold of a synchronization signal block for random access (msgA-RSRP-ThresholdSSB); a reference signal received power threshold for random access (msgA-RSRP-Threshold); a reference signal received power threshold for beam failure recovery (rsrp-ThresholdBFR).

Here, each RSRP threshold may be used as follows.

For rsrp-ThresholdSSB, UE may select the SS block and corresponding PRACH resource for path-loss estimation and (re)transmission based on SS blocks that satisfy the threshold (see TS 38.213[13]).

For rsrp-ThresholdSSB, L1-RSRP threshold used for determining whether a candidate beam may be used by the UE to attempt contention-free random access to recover from beam failure (see TS 38.213[13], clause 6).

For rsrp-ThresholdSSB-SUL, the UE selects SUL carrier to perform random access based on this threshold (see TS 38.321[3], clause 5.1.1).The value applies to all the BWPs.

For msgA-RSRP-Threshold, the UE selects 2-step random access type to perform random access based on this threshold (see TS 38.321[3], clause 5.1.1).This field is only present if both 2-step and 4-step RA type are configured for the BWP.

For msgA-RSRP-ThresholdSSB, UE may select the SS block and corresponding PRACH resource for path-loss estimation and (re)transmission based on SS blocks that satisfy the threshold (see TS 38.213[13]).

For rsrp-ThresholdCSI-RS, an RSRP threshold for selection of CSI-RS for 4-step RA type. If the random access procedure is initiated for beam failure recovery, rsrp-ThresholdCSI-RS is equal to rsrp-ThresholdSSB in BeamFailureRecoveryConfig IE.

That is, for rsrp-ThresholdSSB, the UE selects the SSB and corresponding PRACH resource for path loss estimation and retransmission based on the SSB that meets the threshold (rsrp-ThresholdSSB); for rsrp-ThresholdSSB, the L1-RSRP threshold used for determining whether a candidate beam may be used by the UE to attempt contention-free random access to recover from beam failure; for rsrp-ThresholdSSB-SUL, the UE selects the SUL carrier to perform random access based on the threshold (rsrp-ThresholdSSB-SUL), the rsrp-ThresholdSSB-SUL is applicable to all bandwidths, and all bandwidths include at least one of: a bandwidth dedicated to a RedCap UE, a bandwidth dedicated to a common UE, and a bandwidth shared by a RedCap UE and a common UE; for msgA-RSRP-Threshold, the UE selects the 2-step random access type to perform random access based on the threshold (msgA-RSRP-Threshold), and a field indicating msgA-RSRP-Threshold is only present if both 2-step random access and 4-step random access are configured for the BWP; for msgA-RSRP-ThresholdSSB, the UE may select the SSB and corresponding PRACH resource for path-loss estimation and retransmission based on the SSB that meets the threshold (msgA-RSRP-ThresholdSSB); for rsrp-ThresholdCSI-RS, it is an RSRP threshold for the selection of CSI-RS for 4-step random access type, and if the random access procedure is initiated for beam failure recovery, the threshold (rsrp-ThresholdCSI-RS) is equal to rsrp-ThresholdSSB in an information unit (IE) configured for beam failure recovery.

In some embodiments, R17 newly introduces functions such as small data transmission (SDT) and/or coverage enhancement. In the use of these functions, the following thresholds are defined: an RSRP threshold for SDT initiation, used to initiate the SDT; an RSRP threshold for carrier selection of SDT, used to determine whether to perform SDT on SUL or NUL; an RSRP threshold for RACH type selection of SDT, used to determine whether to use 2-step RACH SDT or 4-step RACH SDT; an RSRP threshold for Msg.3 coverage enhancement, used to determine whether to use a coverage enhancement operation for Msg.3.

In some embodiments, the RedCap UE reduces the antenna structure, and the RedCap UE supports at least one of the following antenna structures. RedCap UE in FR1 supports an antenna structure of 2 receiving antennas or 1 receiving antenna. RedCap UE in FR2 supports an antenna structure of 2 receiving antennas; and each receiving antenna has N antenna elements or each receiving antenna contains N/2 antenna elements, where N is an integer greater than 1.

As shown in FIG. 2, the present invention provides a method for determining a parameter of an RSRP threshold performed by a network device, including the following step.

In S21, a bias parameter of an RSRP threshold of a first-type UE is determined according to configuration-related information of the first-type UE.The first-type UE is a UE of which an antenna structure is reduced with respect to a second-type UE.

In the above embodiment, the bias parameter may be specified by a communication protocol or determined by the network device. If the bias parameter is determined by the network device, the method further includes: sending, by the network device, configuration information indicating the bias parameter.

In the embodiment of the present invention, if the bias parameter is specified by the communication protocol, the network device and the first-type UE may each determine a current corresponding bias parameter of the first-type UE according to the communication protocol. In an implementation, the network device determines the current bias parameter corresponding to the first-type UE according to the configuration-related information reported by the first-type UE. In another implementation, the network device determines the configuration-related information of the first-type UE, and determines the current corresponding bias parameter of the first-type UE according to the configuration-related information of the first-type UE.

In an embodiment, the bias parameter of the RSRP threshold of the first-type UE is used for the first-type UE to determine the RSRP threshold. For example, the first-type UE may determine the RSRP threshold of the first-type UE according to the bias parameter of the first-type UE and an RSRP threshold of the second type UE.Here, the RSRP threshold of the second UE may be, but is not limited to, an RSRP threshold used by a common UE specified in traditional 3GPP Release 15 and/or Release 16.

Here, the network device may be, but is not limited to, an access network device or a core network device. The access network device may include various types of base stations. For example, it may be a 2G base station, a 3G base station, a 4G base station, a 5G base station or other evolved base stations. The core network device may include, but is not limited to, various entities or network element functions of the core network.

Here, the second-type UE may be a common NR UE. The second-type UE includes, but is not limited to, an enhanced mobile bandwidth (eMBB) UE and/or an ultra-reliable delay communication (uRLLC) UE. For example, it may be eMBB UE and/or uRLLC UE in a 5G NR system or other enhanced network systems.

Here, the first-type UE includes one of: a UE of which a number of receiving antennas is smaller than a number of receiving antennas of the second-type UE in a first frequency range; or a UE of which a number of antenna elements included in an antenna panel is smaller than that of the second-type UE in a second frequency range.

Here, the number of antenna elements included in the antenna panel of the first-type UE is smaller than that of the antenna panel of the second-type UE refers to that antenna elements included in each receiving antenna of the first-type UE is smaller than the number of antenna elements included in each receiving antenna of the second-type UE.

In an embodiment, the maximum value of the first frequency range is less than or equal to the minimum value of the second frequency range.

In another embodiment, the first frequency range includes FR1; and/or the second frequency range includes FR2. For example, a frequency range corresponding to FR1 may be from 450MHz to 6000MHz; and a frequency range corresponding to FR2 may be from 24250MHz to 52600MHz.

For example, the first-type UE supports an antenna structure of one receiving antenna; the second-type UE supports an antenna structure of at least two receiving antennas.

For example, the first-type UE supports an antenna structure in which each receiving antenna includes a first number of antenna elements; and the second-type LTE supports an antenna structure in which each receiving antenna includes a second number of antenna elements, the first number is smaller than the second number. In an embodiment, the first number is N/2, and the second number is N, where N is an even number greater than 0.

In some embodiments of the present invention, the first-type UE and the second-type UE may be any other mobile terminals or fixed terminals, as long as the antenna structure of the first-type UE has been reduced compared with the antenna structure of the second-type UE. The first-type UE and the second-type UE are not limited in the present invention. For example, both the first-type UE and the second-type UE may be mobile phones, computers, servers, wearable devices, game control platforms or multimedia devices.

In an embodiment, the first-type UE includes: RedCap UE and/or 5G NR-lite UE.

In some embodiments, the configuration-related information of the first-type UE includes at least one of: a measurement resource of the first-type UE; a frequency range in which the first-type UE is located; an RSRP threshold type of the first-type UE; or application scenario information used to determine an application scenario of the first-type UE.

Here, the measurement resource includes, but is not limited to, at least one of CSI-RS or SSB.

Here, the frequency range includes, but is not limited to, at least one of: a first frequency range or a second frequency range.

Here, the RSRP threshold type includes, but is not limited to, at least one of: rsrp-ThresholdSSB, used to allow the UE to determine whether it is allowed to select a PRACH resource corresponding to an SSB of which an RSRP is greater than rsrp-ThresholdSSB to perform an operation; rsrp-ThresholdCSI-RS, used to allow the UE to determine whether it is allowed to select a random access resource of which an RSRP is greater than rsrp-ThresholdCSI-RS to perform operation of beam recovery; msgA-RSRP-ThresholdSSB, used to allow the UE to determine whether it is allowed to select a PRACH resource of msgA corresponding to an SSB of which an RSRP is greater than msgA-RSRP-ThresholdSSB to perform an operation; msgA-RSRP-Threshold, used to allow the UE to determine whether to select a 2-step random access type to perform random access, and/or determine whether it is allowed to select a RACH resource of which an RSRP is greater than msgA-RSRP-Threshold to perform random access; rsrp-ThresholdBFR, used to allow the UE to determine whether it is allowed to select a RACH resource of which an RSRP is greater than rsrp-ThresholdBFR to perform random access during beam failure recovery; an RSRP threshold for SDT initiation, used to determine whether to initiate the SDT; an RSRP threshold for carrier selection of SDT, used to determine whether to perform SDT on SUL or NUL; an RSRP threshold for RACH type selection of SDT, used to determine whether to use 2-step RACH SDT or 4-step RACH SDT; or an RSRP threshold for Msg.3 coverage enhancement, used to determine whether to use coverage enhancement means for Msg.3.

Here, the application scenarios include, but are not limited to, at least one of: a random access scenario, a beam recovery scenario, a small data transmission scenario, and a coverage enhancement scenario.

In the embodiment of the present invention, the bias parameter of the RSRP threshold of the first-type UE may be determined by the network device based on the configuration-related information corresponding to different first-type UEs. The first-type UE is the UE that has been subjected to antenna structure reduction relative to the second-type UE. In this way, the embodiments of the present invention, on the one hand, the bias parameters of the RSRP thresholds for the first-type UEs with different configuration-related information may be determined accurately, so as to facilitate the first-type UEs to determine an appropriate RSRP threshold for individual first-type UEs based on the bias parameters. On the other hand, a flexible configuration of the bias parameters for the first-type UEs with different configuration-related information can be achieved.

In S21, determining the bias parameter of the RSRP threshold of the first-type UE according to the configuration-related information of the first-type UE includes: determining a same bias parameter according to different configuration-related information of the first-type UE; or determining different bias parameters according to different configuration-related information of the first-type UE.

As shown in FIG. 3, an embodiment of the present invention provides a method for determining a parameter of an RSRP threshold, performed by the network device, including the following step.

In S31, configuration information is sent. The configuration information indicates the bias parameter corresponding to the configuration-related information of the first-type UE.

Here, the configuration information indicates at least one of: at least one frequency range and a bias parameter corresponding to the frequency range; at least one measurement resource and a bias parameter corresponding to the measurement resource; at least one RSRP threshold and a bias parameter corresponding to the RSRP threshold; or at least one application scenario information and a bias parameter corresponding to the application scenario information.

In this way, in the embodiment of the present invention, the configuration information may be sent to the first-type UE from the network device, so as to facilitate the first-type UE to accurately determine a bias parameter for correcting the RSRP threshold corresponding to the first-type UE according to the configuration information and the configuration-related information of the first-type UE.

It should be noted that those skilled in the art can understand that the methods provided in the embodiments of the present invention may be executed alone or together with some methods in the embodiments of the present invention or some methods in related technologies.

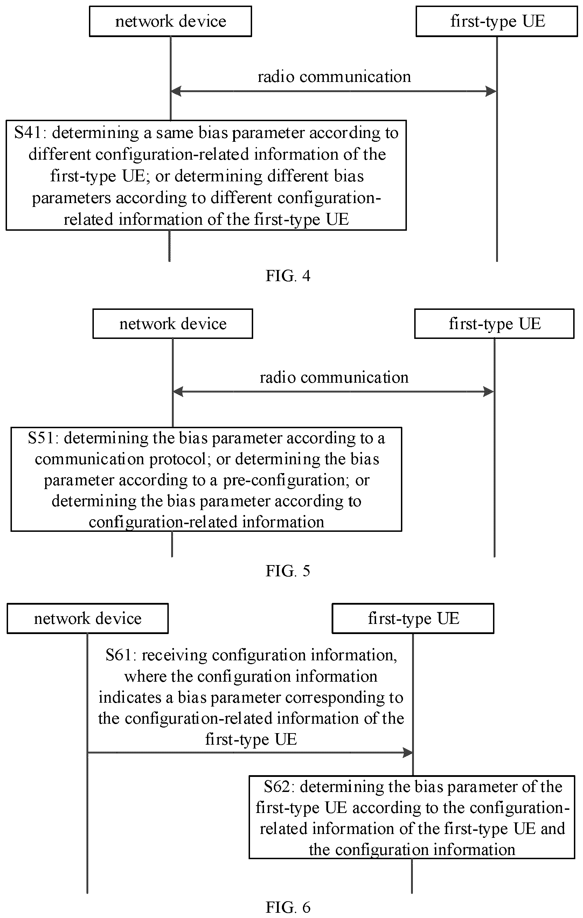

As shown in FIG. 4, an embodiment of the present invention provides a method for determining a parameter of an RSRP threshold, performed by the network device, including the following step.

In S41, a same bias parameter is determined according to different configuration-related information of the first-type UE; or different bias parameters are determined according to different configuration-related information of the first-type UE.

In some embodiments of the present invention, the configuration-related information may be the configuration-related information in S21, and the bias parameter may be the bias parameter in S21.

In some embodiments, in S41, determining the same bias parameter according to different configuration-related information of the first-type UE includes: determining the same bias parameter based on different measurement resources, different frequency ranges and/or different application scenario information for individual RSRP thresholds of the first-type UE.

Embodiments of the present invention provide a method for determining a parameter of an RSRP threshold, performed by a network device, including: determining the same bias parameter according to at least two different parameters in the configuration-related information of the first-type UE.

For example, the same bias parameter is determined according to differences in at least two of the measurement resource, the frequency range and the application scenario information for each RSRP threshold of the first-type UE.

For example, the network device configures the same bias parameter for the first-type UE under FR1 and using the SSB measurement resource and for the first-type UE under FR1 and using the CSI-RS measurement resource; or the network device configures the same bias parameter for the first-type UE under FR1 and using the SSB measurement resource in the small data transmission scenario and for the first-type UE under FR2 and using the CSI-RS measurement resource in the random access scenario; or the network device configures the same bias parameter for the first-type UE under FR1 and using an RSRP threshold of the CSI-RS measurement resource in the beam recovery scenario and for the first-type UE under FR2 and using an RSRP threshold of the SSB measurement resource in the random access scenario; and so on.

In conclusion, in the embodiments of the present invention, the same bias parameter may be configured for the first-type UEs whose two random parameters in the configuration-related information are the same or different. That is, the same bias parameter may be configured for the first-type UE with at least two of the frequency range, the application scenario, the measurement resource, and the RSRP threshold type being the same.

Embodiments of the present invention provide the method for determining the parameter of the RSRP threshold, performed by the network device, including: sending configuration information, where the configuration information is used to indicate that for each RSRP threshold type, different configuration-related information corresponds to the same bias parameter. Here, when the first-type UE receives the configuration information, it may be determined that the same correction value is configured in any frequency range and/or using any measurement resource and/or for any application scenario and/or for the RSRP threshold, and the RSRP threshold of the first-type UE is determined according to the correction value and the RSRP threshold of the second-type UE.

In the embodiments of the present invention, the network device can configure the same bias parameter for different configuration-related information of the first-type UE (at least part of the frequency range, the measurement resource, the application scenario, and the RSRP threshold type are different). On the one hand, this facilitates the management of the network device, and on the other hand, this also facilitates individual first-type UE to determine the RSRP threshold according to unified bias parameter in case of individual configuration-related information. This same bias parameter may be determined according to the communication protocol or determined by the network device.

In some embodiments, in S41, determining different bias parameters according to different configuration-related information of the first-type UE includes at least one of: determining the bias parameter to be a first bias parameter in response to the measurement resource of the first-type UE being a CSI-RS; or determining the bias parameter to be a second bias parameter in response to the measurement resource of the first-type UE being an SSB.

Embodiments of the present invention provide the method for determining the parameter of the RSRP threshold, performed by the network device, including: determining the bias parameter to be a first bias parameter in response to the measurement resource of the first-type UE being a CSI-RS; or determining the bias parameter to be a second bias parameter in response to the measurement resource of the first-type UE being an SSB.

In an embodiment, the first bias parameter is different from the second bias parameter.

Embodiments of the present invention provide a method for determining a parameter of an RSRP threshold, performed by a network device, including: sending configuration information, where the configuration information indicates at least one of: a measurement resource of the CSI-RS, which corresponds to the first bias parameter; or a measurement resource of the SSB, which corresponds to the second bias parameter.

For example, the network device determines the first bias parameter (offset1) according to the measurement resource of the first-type UE being CSI-RS, and/or the network device determines the second bias parameter (offset2) according to the measurement resource of the first-type UE being SSB. The network device sends the configuration information to the first-type UE, and the configuration information includes at least one of: CSI-RS being mapped to offset1, or SSB being mapped to offset2. In an implementation, when the first-type UE receives the configuration information, if the measurement resource of the first-type UE is CSI-RS, the bias parameter of the first-type UE is determined to be offset1 according to the CSI-RS measurement resource of the first-type UE and the configuration information, and then the RSRP threshold of the first-type UE is determined to be H+offset1. In another implementation, if the measurement resource of the first-type UE is SSB, the bias parameter of the first-type UE is determined to be offset2 according to the SSB measurement resource of the first-type UE and the configuration information, and the RSRP threshold of the first-type UE is determined to be H+offset2. Here, H is the RSRP threshold of the second-type UE.

In some embodiments of the present invention, term "map" may be understood as "correspond". For example, CSI-RS being mapped to offset1 means that the bias parameter corresponding to CSI-RS is offset1.

In the embodiments of the present invention, the network device may configure different bias parameters for the first-type UE(s) using different resource measurements, thus improving personalization of the bias parameters configured for the first-type UE(s). In this way, the first-type UE may be configured with an appropriate bias parameter to correct the RSRP threshold when using each measurement resource.

In some embodiments, in S41, determining different bias parameters according to different configuration-related information of the first-type UE includes at least one of: determining the bias parameter to be a third bias parameter in response to the frequency range in which the first-type UE is located being the first frequency range; or determining the bias parameter to be a fourth bias parameter in response to the frequency range in which the first-type UE is located being the second frequency range.

Embodiments of the present invention provide the method for determining the parameter of the RSRP threshold performed by the network device, and in S41, determining different bias parameters according to different configuration-related information of the first-type UE includes at least one of: the first frequency range corresponding to the third bias parameter; or the second frequency range corresponding to the fourth bias parameter.

Here, the frequency range in which the first-type UE is located is a frequency range in which a serving cell of the first-type UE is located.

For example, the network device determines the third bias parameter (offset3) based on the frequency range of the first-type UE being the first frequency range, and/or determines the fourth bias parameter (offset4) based on the frequency range of the first-type UE being the second frequency range. The network device sends the configuration information to the first-type UE, where the configuration information includes: the first frequency range being mapped to offset3 and/or the second frequency range being mapped to offset4. When the first-type UE receives the configuration information, if the first-type UE is in the first frequency range, the bias parameter of the first-type UE may be determined to be offset3 according to the first frequency range of the first-type UE and the configuration information, and the RSRP threshold of the first-type UE is determined to be H+offset3; if the first-type UE is in the second frequency range, the bias parameter of the first-type UE may be determined to be offset4 according to the second frequency range of the first-type UE and the configuration information, and the RSRP threshold of the first-type UE is determined to be H+offset4. Here, H is the RSRP threshold of the second-type UE.

In the embodiments of the present invention, the network device may configure different bias parameters for the first-type UE(s) in different frequency ranges, thus improving personalization of the bias parameter configured for the first-type UE(s). In this way, the first-type UE(s), when being in different frequency ranges, may be configured with an appropriate bias parameter to correct the RSRP threshold.

In some embodiments, in S41, determining different bias parameters according to different configuration-related information of the first-type UE includes: determining different bias parameters for at least two RSRP thresholds in each RSRP threshold type of the first-type UE.The RSRP threshold includes at least one of: rsrp-ThresholdSSB, used to allow a UE to determine whether it is allowed to select a PRACH resource corresponding to an SSB of which an RSRP is greater than rsrp-ThresholdSSB to perform an operation; rsrp-ThresholdCSI-RS, used to allow a UE to determine whether it is allowed to select a random access resource of which an RSRP is greater than rsrp-ThresholdCSI-RS to perform an operation of beam recovery; msgA-RSRP-ThresholdSSB, used to allow a UE to determine whether it is allowed to select a PRACH resource of MsgA corresponding to an SSB of which an RSRP is greater than msgA-RSRP-ThresholdSSB to perform an operation; msgA-RSRP-Threshold, used to allow a UE to determine whether it is allowed to select a 2-step random access type to perform random access, and/or determine whether it is allowed to select a RACH resource of which an RSRP is greater than msgA-RSRP-Threshold to perform random access; rsrp-ThresholdBFR, used to allow a UE to determine whether it is allowed to select a RACH resource of which an RSRP is greater than rsrp-ThresholdBFR to perform random access during beam failure recovery; an RSRP threshold for SDT initiation, used to determine whether to initiate the SDT; an RSRP threshold for carrier selection of SDT, used to determine whether to perform SDT on SUL or NUL; an RSRP threshold for RACH type selection of SDT, used to determine whether to use 2-step RACH SDT or 4-step RACH SDT; or an RSRP threshold for Msg.3 coverage enhancement, used to determine whether to use a coverage enhancement operation for Msg.3.

Embodiments of the present invention provide the method for determining the parameter of the RSRP threshold, performed by the network device, including: determining a corresponding bias parameter according to each RSRP threshold type of the first-type UE. At least two RSRP thresholds in each RSRP threshold type of the first-type UE correspond to different bias parameters.

In a possible implementation, all individual RSRP thresholds in each RSRP threshold type correspond to different bias parameters; or some RSRP thresholds in each RSRP threshold type correspond to different bias parameters, and some RSRP thresholds correspond to the same bias parameter.

For example, the network device configures a bias parameter for rsrp-ThresholdSSB in each RSRP threshold type of the first-type UE to be offset5, and a bias parameter for rsrp-ThresholdCSI-RS to be offset6.

For example, the network device configures a bias parameter for rsrp-ThresholdSSB in each RSRP threshold type of the first-type UE to be offset5, a bias parameter for rsrp-ThresholdCSI-RS to be offset6, and a bias parameter for rsrp-ThresholdCSI-RS to be offset7.

For example, the network device configures a bias parameter for rsrp-ThresholdSSB and rsrp-ThresholdCSI-RS in each RSRP threshold type of the first-type UE to be offset5, a bias parameter for msgA-RSRP-ThresholdSSB to be offset6, and a bias parameter for the RSRP threshold for the SDT initiation and the RSRP threshold for the Msg.3 coverage enhancement to be offset7

Embodiments of the present invention provide the method for determining the parameter of the RSRP threshold, performed by the network device, including: determining different bias parameters for individual RSRP thresholds of the first-type UE.

For example, the network device determines that bias parameters configured for rsrp-ThresholdSSB, rsrp-ThresholdCSI-RS, msgA-RSRP-ThresholdSSB, msgA-RSRP-Threshold, rsrp-ThresholdBFR, the RSRP threshold for the SDT initiation, the RSRP threshold for the carrier selection of SDT, the RSRP threshold for RACH type selection of SDT and the RSRP threshold for Msg.3 coverage enhancement in each RSRP threshold type of the first-type UE are offset5, offset6, offset7, offset8, offset9, offset10, offset11, offset12 and offset13, respectively.

Embodiments of the present invention provide the method for determining the parameter of the RSRP threshold, performed by network device, including: sending configuration information, where the configuration information indicates that at least two RSRP thresholds in each RSRP threshold type are mapped to different bias parameters.

Embodiments of the present invention provide the method for determining the parameter of the RSRP threshold, performed by network device, including: sending configuration information, where the configuration information indicates that individual RSRP thresholds are mapped to different bias parameters.

For example, the network device sends the configuration information to the first-type UE, where the configuration information may indicate, but is not limited to, at least one of: rsrp-ThresholdSSB mapped to offset5, and/or rsrp-ThresholdCSI-RS mapped to offset6; rsrp-ThresholdSSB mapped to offset5, rsrp-ThresholdCSI-RS mapped to offset6, and/or rsrp-ThresholdCSI-RS mapped to offset7; rsrp-ThresholdSSB and rsrp-ThresholdCSI-RS mapped to offset5, msgA-RSRP-ThresholdSSB mapped to offset6, the RSRP threshold for SDT initiation and the RSRP threshold for Msg.3 coverage enhancement mapped to offset7; or rsrp-ThresholdSSB mapped to offset5, rsrp-ThresholdCSI-RS mapped to offset6, msgA-RSRP-ThresholdSSB mapped to offset7, msgA-RSRP-Threshold mapped to offset8, rsrp-ThresholdBFR mapped to offset9, the RSRP threshold for SDT initiation mapped to offset10, the RSRP threshold for carrier selection of SDT mapped to offset11, the RSRP threshold for RACH type selection of SDT mapped to offset12 and the RSRP threshold for Msg.3 coverage enhancement mapped to offset13.

In the embodiments of the present invention, the network device may configure the first-type UE with different bias parameters for at least one RSRP and the remaining RSRPs in the different RSRPs, or configure the first-type UE with different bias parameters for each individual RSRP thresholds. In this way, the personalization and diversity of the bias parameter configured for each first-type UE can be improved, and an appropriate bias parameter can be configured for the first-type UE with different RSPR thresholds to correct the RSRP threshold.

In some embodiments, in S41, determining different bias parameters according to different configuration-related information of the first-type UE includes: determining different bias parameters for application scenario information corresponding to at least two application scenarios in individual application scenarios of the first-type UE. The application scenario includes at least one of: a random access scenario, including an application scenario where one of rsrp-ThresholdSSB, msgA-RSRP-ThresholdSSB, or msgA-RSRP-Threshold is used; a beam recovery scenario including an application scenario where one of rsrp-ThresholdCSI-RS or rsrp-ThresholdBFR is used; a small data transmission (SDT) scenario including an application scenario where one of an RSRP threshold for SDT initiation, an RSRP threshold for carrier selection of SDT, and an RSRP threshold for RACH type selection of SDT is used; or a coverage enhancement scenario including an application scenario where an RSRP threshold for Msg.3 coverage enhancement is used.

In a possible implementation, all individual application scenarios correspond to different bias parameters; or some application scenarios in the individual application scenarios correspond to different bias parameters, and some application scenarios in the individual application scenarios correspond to the same bias parameter. In the above embodiment, the bias parameter may be determined according to the communication protocol or determined by the network device.

Embodiments of the present invention provide the method for determining the parameter of the RSRP threshold, performed by the network device, including: determining different bias parameters for application scenario information corresponding to at least two application scenarios in the individual application scenarios of the first-type UE.

For example, the network device configures a bias parameter for the application scenario information corresponding to the random access scenario of the first-type UE to be offset1, and the network device configures a bias parameter for the application scenario information corresponding to the beam recovery scenario of the first-type UE to be offset2.

For example, the network device configures a bias parameter for the application scenario information corresponding to the random access scenario of the first-type UE to be offset1, the network device configures a bias parameter for the application scenario information corresponding to the beam recovery scenario of the first-type UE to be offset2, and the network device configures a bias parameter for the application scenario information corresponding to the small data transmission scenario and the application scenario information corresponding to the coverage enhancement scenario of the first-type UE to be offset3 respectively.

Embodiments of the present invention provide the method for determining the parameter of the RSRP threshold, performed by the network device, including: determining different bias parameters for application scenario information corresponding to each application scenario of the first-type UE.

For example, the network device configures a bias parameter for the application scenario information corresponding to the random access scenario of the first-type UE to be offset1, the network device configures a bias parameter for the application scenario information corresponding to the beam recovery scenario of the first-type UE to be offset2, the network device configures a bias parameter for the application scenario information corresponding to the small data transmission scenario of the first-type UE to be offset3, and the network device configures a bias parameter for the application scenario information corresponding to the coverage enhancement scenario of the first-type UE to be offset4.

For example, the bias parameter configured by the network device for the application scenario information of the random access scenario involving rsrp-ThresholdSSB, msgA-RSRP-ThresholdSSB, or msgA-RSRP-Threshold of the first-type UE is offset1, offset2, or offset3, respectively.

Embodiments of the present invention provide the method for determining the parameter of the RSRP threshold, performed by the network device, including: sending the configuration information, where the configuration information indicates application scenario information corresponding to at least two application scenarios in the individual application scenarios, which corresponding to different bias parameters.

For example, the network device sends the configuration information, and the configuration information may indicate, but is not limited to, at least one of: the application scenario information of the random access scenario mapped to offset1, the application scenario information of the beam recovery scenario mapped to offset2, the application scenario information of the small data transmission scenario and the application scenario information of the coverage enhancement scenario mapped to offset3, or the application scenario information of the coverage enhancement scenario mapped to offset4.

The application scenario information of the random access scenario involving rsrp-ThresholdSSB, msgA-RSRP-ThresholdSSB or msgA-RSRP-Threshold is mapped to offset1, offset2 or offset3, respectively, and/or the application scenario information of the beam recovery scenario involving rsrp-ThresholdCSI-RS or rsrp-ThresholdBFR is mapped to offset4 and offset5, respectively, and/or the application scenario information of the small data transmission scenario involving the RSRP threshold for the SDT initiation, the RSRP threshold for the carrier selection of the SDT or the RSRP threshold for the RACH type selection of the SDT is mapped to offset6, offset7 and offset8, respectively, and/or the application scenario information of the coverage enhancement scenario involving the RSRP threshold for Msg.3 coverage enhancement is mapped to offset9.

For example, the configuration information may indicate: the application scenario information of the random access scenario mapped to offset1, and the application scenario information of the for beam recovery scenario mapped to offset2; or the application scenario information of the random access scenario mapped to offset1, the application scenario information of the for beam recovery scenario mapped to offset2, and the application scenario information of the small data transmission scenario and the application scenario information of the coverage enhancement scenario mapped to offset3; or the application scenario information of the random access scenario mapped to offset1, the application scenario information of the for beam recovery scenario mapped to offset2, the application scenario information of the small data transmission scenario mapped to offset3, and the application scenario information of the coverage enhancement scenario mapped to offset4.

In the embodiments of the present invention, the network device may configure the first-type UE with different bias parameters for at least one application scenario and the remaining application scenarios in the different application scenarios, or configure the first-type UE with different bias parameters for each individual application scenarios. In this way, the personalization and diversity of the bias parameter configured for each first-type UE can be improved, and an appropriate bias parameter can be configured for the first-type UE in different application scenarios to correct the RSRP threshold.

As shown in FIG. 5, embodiments of the present invention provides a method for determining a parameter of an RSRP threshold, performed by a network device, including the following step.

In S51, the bias parameter is determined according to a communication protocol, a pre-configuration, or the configuration-related information.

For example, the network device may determine the bias parameter of the first-type UE according to the communication protocol and the configuration-related information of the first-type UE.

For example, the network device may determine the bias parameter of the first-type UE according to the configuration-related information of the first-type UE.

For example, the network device may determine the bias parameter of the first-type UE according to the pre-configuration.

In some embodiments of the present invention, the bias parameter is a bias parameters in any of the above embodiments. For example, the bias parameter may be the same bias parameter determined for different configuration-related information in the above embodiment, or the bias parameter may be a different bias parameter determined for different configuration-related information in the above embodiment. For another example, the bias parameter may be, but is not limited to, at least one of a first bias parameter, a second bias parameter, a third bias parameter, a fourth bias parameter, a bias parameter mapped to at least one RSRP threshold, and a bias parameter mapped to at least one frequency range, or a bias parameter mapped to at least one application scenario information.

In the embodiments of the present invention, the bias parameters corresponding to individual pieces of configuration-related information of the first-type UE may be determined according to the communication protocol and the pre-configuration, thus improving the diversity of the bias parameter configuration and the applicability to more application scenarios.

It should be noted that those skilled in the art can understand that the method provided in the embodiments of the present invention may be executed alone or together with some methods in the embodiments of the present invention or some methods in related technologies.

A method for determining a parameter of an RSRP threshold described below is performed by a UE, which is similar to the description of the above-mentioned method for determining the parameter of the RSRP threshold performed by the network device. Technical details not disclosed in the embodiments of the method for determining the parameter of the RSRP threshold performed by the UE may be referred to the description of the embodiments of the method for determining the parameter of the RSRP threshold performed by the network device, which will not be described in detail here.

Embodiments of the present invention provide a method for determining a parameter of an RSRP threshold, performed by a first-type UE, including: a bias parameter of an RSRP threshold of the first-type UE is determined according to configuration-related information of the first-type UE. The first-type UE is a UE of which an antenna structure is reduced with respect to a second-type UE.

In some embodiments, determining the bias parameter of the RSRP threshold of the first-type UE according to configuration-related information of the first-type UE includes: determining the bias parameter corresponding to the configuration-related information of the first-type UE according to a communication protocol and the configuration-related information of the first-type UE.

Embodiments of the present invention provide the method for determining the parameter of the RSRP threshold, performed by the first-type UE, including: determining the bias parameter corresponding to the configuration-related information of the first-type UE according to a communication protocol and the configuration-related information of the first-type UE.

In some embodiments, the method includes: receiving configuration information, where the configuration information indicates configuration-related information of the first-type UE and a corresponding bias parameter. Determining the bias parameter of the RSRP threshold of the first-type UE according to the configuration-related information of the first-type UE includes: determining the bias parameter of the first-type UE according to the configuration-related information of the first-type UE and the configuration information.

As shown in FIG. 6, embodiments of the present invention provide a method for determining a parameter of an RSRP threshold, performed by the first-type UE, including the following steps.

In S61, configuration information is received, where the configuration information indicates a bias parameter corresponding to the configuration-related information of the first-type UE.

In S62, the bias parameter of the first-type UE is determined according to the configuration-related information of the first-type UE and the configuration information. The first-type UE is a UE of which an antenna structure is reduced with respect to a second-type UE.

In some embodiments of the present invention, the configuration information may be the configuration information in the above-mentioned embodiments, the configuration-related information may be the configuration-related information in the above-mentioned embodiments related to S21, and the bias parameter may be the bias parameter in the above-mentioned embodiments related to S21. The first-type UE and the second-type UE are respectively the first-type UE and the second-type UE in the above embodiments.

For example, the first-type UE includes, but is not limited to, one of: a UE of which a number of receiving antennas is smaller than a number of receiving antennas of the second-type UE in a first frequency range; or a UE of which a number of antenna elements included in an antenna panel is smaller than that of the second-type UE in a second frequency range.

In another example, the second-type UE may be, but is not limited to, an enhanced mobile bandwidth (eMBB) UE and/or an ultra-reliable delay communication (uRLLC) UE.

In another example, the configuration-related information of the first-type UE includes at least one of: a measurement resource of the first-type UE; a frequency range in which the first-type UE is located; an RSRP threshold type of the first-type UE; or application scenario information used to determine an application scenario of the first-type UE.

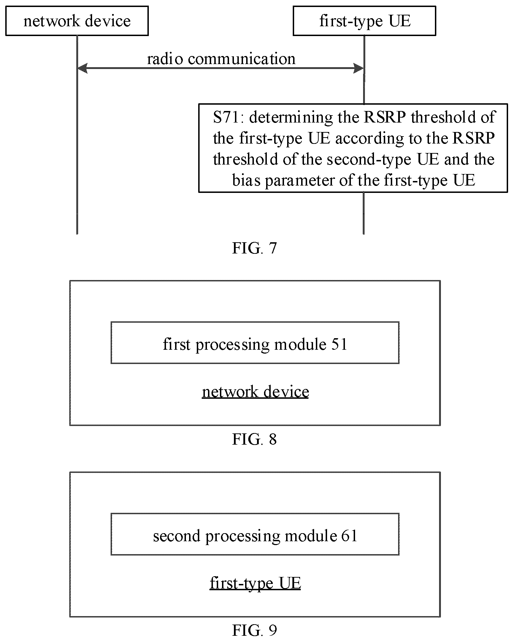

As shown in FIG. 7, embodiments of the present invention provide a method for determining a parameter of an RSRP threshold, performed by the first-type UE, including the following step.

In S71, an RSRP threshold of the first-type UE is determined according to an RSRP threshold of the second-type UE and the bias parameter of the first-type UE.

In some embodiments, the configuration information indicates that different configuration-related information is mapped to a same bias parameter; or the configuration information indicates that different configuration-related information is mapped to different bias parameters.

In some embodiments, the configuration information indicates that at least two different parameters in the configuration-related information of the first-type UE correspond to the same bias parameter.

In some embodiments, the configuration information indicates at least one of: a measurement resource of a CSI-RS corresponding to a first bias parameter; or a measurement resource of an SSB corresponding to a second bias parameter; the step in S62 includes one of: determining the bias parameter of the first-type UE to be the first bias parameter according to the configuration information and the measurement resource of the first-type UE being the CSI-RS; or determining the bias parameter of the first-type UE to be the second bias parameter according to the configuration information and the measurement resource of the first-type UE being the SSB.

Embodiments of the present invention provide the method for determining the parameter of the RSRP threshold, performed by the first-type UE, including: determining the bias parameter of the first-type UE to be the first bias parameter according to the configuration information and the measurement resource of the first-type UE being the CSI-RS; or determining the bias parameter of the first-type UE to be the second bias parameter according to the configuration information and the measurement resource of the first-type UE being the SSB.

In some embodiments, the step in S71 includes one of: determining the RSRP threshold of the first-type UE of which the measurement resource is the CSI-RS according to the RSRP threshold of the second-type UE and the first bias parameter; or determining the RSRP threshold of the first-type UE of which the measurement resource is the SSB according to the RSRP threshold of the second-type UE and the second bias parameter.

Embodiments of the present invention provide the method for determining the parameter of the RSRP threshold, performed by the first-type UE, including: determining the RSRP threshold of the first-type UE of which the measurement resource is the CSI-RS according to the RSRP threshold of the second-type UE and the first bias parameter; or determining the RSRP threshold of the first-type UE of which the measurement resource is the SSB according to the RSRP threshold of the second-type UE and the second bias parameter.

In some embodiments, the configuration information indicates at least one of: a first frequency range corresponding to a third bias parameter; or a second frequency range corresponding to a fourth bias parameter; the step in S62 includes one of: determining the bias parameter of the first-type UE to be the third bias parameter according to the configuration information and a frequency range of the first-type UE being the first frequency range; or determining the bias parameter of the first-type UE to be the fourth bias parameter according to the configuration information and a frequency range of the first-type UE being the second frequency range.

Embodiments of the present invention provide the method for determining the parameter of the RSRP threshold, performed by the first-type UE, including: determining the bias parameter of the first-type UE to be the third bias parameter according to the configuration information and a frequency range of the first-type UE being the first frequency range; or determining the bias parameter of the first-type UE to be the fourth bias parameter according to the configuration information and a frequency range of the first-type UE being the second frequency range.

In some embodiments, the step in S71 includes one of: determining the RSRP threshold of the first-type UE of which the frequency range is the first frequency range according to the RSRP threshold of the second-type UE and the third bias parameter; or determining the RSRP threshold of the first-type UE of which the frequency range is the second frequency range according to the RSRP threshold of the second-type UE and the fourth bias parameter.

Embodiments of the present invention provide the method for determining the parameter of the RSRP threshold, performed by the first-type UE, including: determining the RSRP threshold of the first-type UE of which the frequency range is the first frequency range according to the RSRP threshold of the second-type UE and the third bias parameter; or determining the RSRP threshold of the first-type UE of which the frequency range is the second frequency range according to the RSRP threshold of the second-type UE and the fourth bias parameter.

In some embodiments, the configuration information indicates that at least two RSRP thresholds in each RSRP threshold type are mapped to different bias parameters. The step in S62 includes determining the bias parameter of the first-type UE to be a bias parameter corresponding to the RSRP threshold of the first-type UE according to the RSRP threshold of the first-type UE and the configuration information.

Embodiments of the present invention provide the method for determining the parameter of the RSRP threshold, performed by the first-type UE, including: determining the bias parameter of the first-type UE to be a bias parameter corresponding to the RSRP threshold of the first-type UE according to the RSRP threshold of the first-type UE and the configuration information.

For example, the first-type UE receives the configuration information from the network device, and the configuration information indicates rsrp-ThresholdSSB mapped to offset5 and rsrp-ThresholdCSI-RS mapped to offset6. If the type of the RSRP threshold of the first-type UE is rsrp-ThresholdSSB, the first-type UE determines the bias parameter of the first-type UE to be offset5 according to the targeted rsrp-ThresholdSSB and the configuration information, and the first-type UE determines the RSRP threshold to be H + offset5. Alternatively, if the type of the RSRP threshold of the first-type UE is rsrp-ThresholdCSI-RS, the first-type UE determines the bias parameter of the first-type UE to be offset6 according to rsrp-ThresholdCSI-RS and the configuration information, and the first-type UE determines the RSRP threshold to be H+offset6. Here, H is the RSRP threshold of the second-type UE.

In some embodiments, the configuration information indicates that application scenario information corresponding to at least two application scenarios in individual application scenarios is mapped to different bias parameters. The step in S62 includes determining the bias parameter of the first-type UE to be a bias parameter corresponding to the application scenario information of the first-type UE according to the application scenario information of the first-type UE and the configuration information.

Embodiments of the present invention provide the method for determining the parameter of the RSRP threshold, performed by the first-type UE, including: determining the bias parameter of the first-type UE to be a bias parameter corresponding to the application scenario information of the first-type UE according to the application scenario information of the first-type UE and the configuration information.

For example, the first-type UE receives the configuration information from the network device, and the configuration information indicates the application scenario information of the random access scenario mapped to offset1 and/or the application scenario information of the beam recovery scenario mapped to offset2. If the application scenario of the first-type UE is the random access scenario, the first-type UE determines the bias parameter of the first-type UE to be offset1 according to the application scenario information corresponding to the used random access scenario and the configuration information, and the first-type UE determines the RSRP threshold to be H+offset1. Alternatively, if the application scenario of the first-type UE is the beam restoration scenario, the first-type UE determines the bias parameter of the first-type UE to be offset2 according to the used beam restoration scenario and the configuration information, and the second-type UE determines the RSRP threshold to be H+offset2. Here, H is the RSRP threshold of the second-type UE.

For an implementation manner of the above embodiments, reference may be made to the description on the network device, which will not be described again here.

It should be noted that those skilled in the art can understand that the method provided in the embodiments of the present invention may be performed alone or together with some methods in the embodiments of the present invention or some methods in related technologies.

In order to further explain the embodiment of the present invention, a specific example is provided below.

Embodiments of the present invention provide a method for determining a parameter of an RSRP threshold, performed by a communication device. The communication device includes: a network device and a UE, and the method for determining the parameter of the RSRP threshold includes the following step.

In S81, the network device determines the same bias parameter based on that at least one of the measurement resource, the frequency range or the application scenario information of the first-type UE under individual RSRP thresholds is different.

Here, the bias parameter may be determined according to the communication protocol or pre-configured by the network device.

In an optional embodiment, the network device sends the configuration information, where the configuration information indicates that under individual RSRP thresholds, different measurement resources, different frequency ranges and/or different application scenarios are mapped to the same bias parameter.

In S82, the network device determines different bias parameters based on that at least one of the RSRP threshold type, the measurement resource, the frequency range or the application scenario information of the first-type UE is different. The step in S82 includes steps in S82A, S82B, S82C and S82D.

Step in S82A includes that the network device determines different bias parameters according to different measurement resources of the first-type UE.

For example, the network device determines the first bias parameter (offset1) based on that the measurement resource of the first-type UE is the CSI-RS. When the first-type UE uses the measurement resource of the CSI-RS, the RSRP threshold is H+offset1. Alternatively, the network device determines the second bias parameter (offset2) based on that the measurement resource of the first-type UE is the SSB. When the first-type UE uses the measurement resource of the SSB, the RSRP threshold is H+offset2. Here, H is the RSRP threshold of the second-type UE.

Step in S82B includes that the network device determines different bias parameters according to different frequency ranges of the first-type UE.

For example, the network device determines the third bias parameter (offset3) based on that the frequency range of the first-type UE is the first frequency range. When the first-type UE is in the first frequency range, the RSRP threshold is H+offset3. Alternatively, the network device determines the fourth bias parameter (offset4) based on that the frequency range of the first-type UE is the second frequency range. When the first-type UE is in the second frequency range, the RSRP threshold is H+offset4. Here, H is the RSRP threshold of the second-type UE. Here, the first-type UE in the first frequency range is a UE that supports one antenna structure under FR1, and the first-type UE in the second frequency range is a UE of which each receiving antenna includes a first number of antenna structures under FR2. In an embodiment, the first number is N/2, where N is an integer greater than 0.

Step in S82C includes that the network device determines different bias parameters for at least two application scenarios based on the first-type UE in different application scenarios. The application scenario include at least one of: the random access scenario, the beam recovery scenario, the small data transmission scenario or the coverage enhancement scenario.

Here, the random access scenario includes an application scenario where one of rsrp-ThresholdSSB, msgA-RSRP-ThresholdSSB, or msgA-RSRP-Threshold is used. The beam recovery scenario includes an application scenario where one of rsrp-ThresholdCSI-RS or rsrp-ThresholdBFR is used. The small data transmission scenario includes an application scenario where one of the RSRP threshold for SDT initiation, the RSRP threshold for carrier selection of SDT, and the RSRP threshold for RACH type selection of SDT is used. The coverage enhancement scenario includes an application scenario where the RSRP threshold for Msg.3 coverage enhancement is used.

Step in S82D includes that the network device determines different correction values for at least two RSRP thresholds based on the first-type UE in different RSRP thresholds. The RSRP thresholds include at least one of: rsrp-ThresholdSSB, rsrp-ThresholdCSI-RS, msgA-RSRP-ThresholdSSB, msgA-RSRP-Threshold, rsrp-ThresholdBFR, an RSRP threshold for SDT initiation, an RSRP threshold for carrier selection of SDT, an RSRP threshold for RACH type selection of SDT or an RSRP threshold for Msg.3 coverage enhancement.

It should be noted that those skilled in the art can understand that the method provided in the embodiments of the present invention can be performed alone or together with some methods in the embodiments of the present invention or some methods in the related technologies.

As shown in FIG. 8, embodiments of the present invention provide an apparatus for determining a parameter of an RSRP threshold, applied to a network device, including: a first processing module 51 configured to determine a bias parameter of an RSRP threshold of a first-type UE according to configuration-related information of the first-type UE. The first-type UE is a UE of which an antenna structure is reduced with respect to a second-type UE.

In some embodiments, the first-type UE includes one of: a UE of which a number of receiving antennas is smaller than a number of receiving antennas of the second-type UE in a first frequency range; or a UE of which a number of antenna elements included in an antenna panel is smaller than that of the second-type UE in a second frequency range.

In some embodiments, the configuration-related information of the first-type UE includes at least one of: a measurement resource of the first-type UE; a frequency range in which the first-type UE is located; an RSRP threshold type of the first-type UE; or application scenario information used to determine an application scenario of the first-type UE.

Embodiments of the present invention provide the apparatus for determining the parameter of the RSRP threshold, applied to the network device, including: the first processing module 51 configured to determine a same bias parameter according to different configuration-related information of the first-type UE.

Embodiments of the present invention provide the apparatus for determining the parameter of the RSRP threshold, applied to the network device, including: the first processing module 51 configured to determine different bias parameters according to different configuration-related information of the first-type UE.

Embodiments of the present invention provide the apparatus for determining the parameter of the RSRP threshold, applied to the network device, including: the first processing module 51 configured to determine a same bias parameter according to different measurement resources, different frequency ranges and/or different application scenario information for individual RSRP thresholds of the first-type UE.

Embodiments of the present invention provide the apparatus for determining the parameter of the RSRP threshold, applied to the network device, including: the first processing module 51 configured to determine the bias parameter to be a first bias parameter in response to the measurement resource of the first-type UE being a CSI-RS.

Embodiments of the present invention provide the apparatus for determining the parameter of the RSRP threshold, applied to the network device, including: the first processing module 51 configured to determine the bias parameter to be a second bias parameter in response to the measurement resource of the first-type UE being an SSB.

Embodiments of the present invention provide the apparatus for determining the parameter of the RSRP threshold, applied to the network device, including: the first processing module 51 configured to determine the bias parameter to be a third bias parameter in response to the frequency range in which the first-type UE is located being the first frequency range.

Embodiments of the present invention provide the apparatus for determining the parameter of the RSRP threshold, applied to the network device, including: the first processing module 51 configured to determine the bias parameter to be a fourth bias parameter in response to the frequency range in which the first-type UE is located being the second frequency range.

Embodiments of the present invention provide the apparatus for determining the parameter of the RSRP threshold, applied to the network device, including: the first processing module 51 configured to determine different bias parameters for at least two RSRP thresholds in each RSRP threshold type of the first-type UE. The RSRP threshold includes at least one of: rsrp-ThresholdSSB, used to allow a UE to determine whether it is allowed to select a physical random access channel (PRACH) resource corresponding to an SSB of which an RSRP is greater than the rsrp-ThresholdSSB to perform an operation; rsrp-ThresholdCSI-RS, used to allow a UE to determine whether it is allowed to select a random access resource of which an RSRP is greater than the rsrp-ThresholdCSI-RS to perform an operation of beam recovery; msgA-RSRP-ThresholdSSB, used to allow a UE to determine whether it is allowed to select a PRACH resource of MsgA corresponding to an SSB of which an RSRP is greater than the msgA-RSRP-ThresholdSSB to perform an operation; msgA-RSRP-Threshold, used to allow a UE to determine whether to select a 2-step random access type to perform random access, and/or determine whether it is allowed to select a random access channel (RACH) resource of which an RSRP is greater than the msgA-RSRP-Threshold to perform random access; rsrp-ThresholdBFR, used to allow a UE to determine whether it is allowed to select a RACH resource of which an RSRP is greater than the rsrp-ThresholdBFR to perform random access during beam failure recovery; an RSRP threshold for SDT initiation, used to determine whether to initiate the SDT; an RSRP threshold for carrier selection of SDT, used to determine whether to perform SDT on a supplementary uplink (SUL) or a normal uplink (NUL); an RSRP threshold for RACH type selection of SDT, used to determine whether to use 2-step RACH SDT or 4-step RACH SDT; or an RSRP threshold for Msg.3 coverage enhancement, used to determine whether to use a coverage enhancement operation for Msg.3.

Embodiments of the present invention provide the apparatus for determining the parameter of the RSRP threshold, applied to the network device, including: the first processing module 51 configured to determine different bias parameters for application scenario information corresponding to at least two application scenarios in individual application scenarios of the first-type UE. The application scenario includes at least one of: a random access scenario including an application scenario where one of rsrp-ThresholdSSB, msgA-RSRP-ThresholdSSB, or msgA-RSRP-Threshold is used; a beam recovery scenario including an application scenario where one of rsrp-ThresholdCSI-RS or rsrp-ThresholdBFR is used; a small data transmission scenario including an application scenario where one of an RSRP threshold for SDT initiation, an RSRP threshold for carrier selection of SDT, or an RSRP threshold for RACH type selection of SDT is used; or a coverage enhancement scenario including an application scenario where an RSRP threshold for Msg.3 coverage enhancement is used.

Embodiments of the present invention provide the apparatus for determining the parameter of the RSRP threshold, applied to the network device, including: the first processing module 51 configured to determine the bias parameter according to a communication protocol.

Embodiments of the present invention provide the apparatus for determining the parameter of the RSRP threshold, applied to the network device, including: the first processing module 51 configured to determine the bias parameter according to a pre-configuration.

Embodiments of the present invention provide the apparatus for determining the parameter of the RSRP threshold, applied to the network device, including: the first processing module 51 configured to determine the bias parameter according to configuration-related information of the first-type UE.

Embodiments of the present invention provide the apparatus for determining the parameter of the RSRP threshold, applied to the network device, including: a first sending module configured to send configuration information, where the configuration information indicates the bias parameter corresponding to the configuration-related information of the first-type UE.

As shown in FIG. 9, embodiments of the present invention provide an apparatus for determining a parameter of an RSRP threshold, performed by a first-type UE, including: a second processing module 61 configured to determine a bias parameter of an RSRP threshold of the first-type UE according to configuration-related information of the first-type UE. The first-type UE is a UE of which an antenna structure is reduced with respect to a second-type UE.

Embodiments of the present invention provide the apparatus for determining the parameter of the RSRP threshold, performed by the first-type UE, including: the second processing module 61 configured to determine the bias parameter corresponding to the configuration-related information of the first-type UE according to a communication protocol and the configuration-related information of the first-type UE.

Embodiments of the present invention provide the apparatus for determining the parameter of the RSRP threshold, performed by the first-type UE, including: a second receiving module configured to receive configuration information, where the configuration information indicates a bias parameter corresponding to the configuration-related information of the first-type UE; the second processing module 61 configured to determine the bias parameter of the first-type UE according to the configuration-related information of the first-type UE and the configuration information. The first-type UE is a UE of which an antenna structure is reduced with respect to a second-type UE.

Embodiments of the present invention provide the apparatus for determining the parameter of the RSRP threshold, performed by the first-type UE, including: the second processing module 61 configured to determine an RSRP threshold of the first-type UE according to an RSRP threshold of the second-type UE and the bias parameter of the first-type UE.

In some embodiments, the first-type UE includes one of: a UE of which a number of receiving antennas is smaller than a number of receiving antennas of the second-type UE in a first frequency range; or a UE of which a number of antenna elements included in an antenna panel is smaller than that of the second-type UE in a second frequency range.

In some embodiments, the configuration-related information of the first-type UE includes at least one of: a measurement resource of the first-type UE; a frequency range in which the first-type UE is located; an RSRP threshold type of the first-type UE; or application scenario information used to determine an application scenario of the first-type UE.

In some embodiments, the configuration information indicates that different configuration-related information is mapped to a same bias parameter; or the configuration information indicates that different configuration-related information is mapped to different bias parameters.

In some embodiments, the configuration information indicates that at least two different parameters in the configuration-related information of the first-type UE correspond to the same bias parameter.

In some embodiments, the configuration information indicates at least one of: a measurement resource of a channel state information-reference signal (CSI-RS) corresponding to a first bias parameter; or a measurement resource of a synchronization signal block (SSB) corresponding to a second bias parameter.

Embodiments of the present invention provide the apparatus for determining the parameter of the RSRP threshold, performed by the first-type UE, including: the second processing module 61 configured to determine the bias parameter of the first-type UE to be the first bias parameter according to the configuration information and the measurement resource of the first-type UE being the CSI-RS.

Embodiments of the present invention provide the apparatus for determining the parameter of the RSRP threshold, performed by the first-type UE, including: the second processing module 61 configured to determine the bias parameter of the first-type UE to be the second bias parameter according to the configuration information and the measurement resource of the first-type UE being the SSB.

Embodiments of the present invention provide the apparatus for determining the parameter of the RSRP threshold, performed by the first-type UE, including: the second processing module 61 configured to determine the RSRP threshold of the first-type UE of which the measurement resource is the CSI-RS according to the RSRP threshold of the second-type UE and the first bias parameter.

Embodiments of the present invention provide the apparatus for determining the parameter of the RSRP threshold, performed by the first-type UE, including: the second processing module 61 configured to determine the RSRP threshold of the first-type UE of which the measurement resource is the SSB according to the RSRP threshold of the second-type UE and the second bias parameter.

In some embodiments, the configuration information indicates at least one of: a first frequency range corresponding to a third bias parameter; or a second frequency range corresponding to a fourth bias parameter.

Embodiments of the present invention provide the apparatus for determining the parameter of the RSRP threshold, performed by the first-type UE, including: the second processing module 61 configured to determine the bias parameter of the first-type UE to be the third bias parameter according to the configuration information and a frequency range of the first-type UE being the first frequency range.

Embodiments of the present invention provide the apparatus for determining the parameter of the RSRP threshold, performed by the first-type UE, including: the second processing module 61 configured to determine the bias parameter of the first-type UE to be the fourth bias parameter according to the configuration information and a frequency range of the first-type UE being the second frequency range.

Embodiments of the present invention provide the apparatus for determining the parameter of the RSRP threshold, performed by the first-type UE, including: the second processing module 61 configured to determine the RSRP threshold of the first-type UE of which the frequency range is the first frequency range according to the RSRP threshold of the second-type UE and the third bias parameter.

Embodiments of the present invention provide the apparatus for determining the parameter of the RSRP threshold, performed by the first-type UE, including: the second processing module 61 configured to determine the RSRP threshold of the first-type UE of which the frequency range is the second frequency range according to the RSRP threshold of the second-type UE and the fourth bias parameter.

In some embodiments, the configuration information indicates that at least two RSRP thresholds in each RSRP threshold type are mapped to different bias parameters.

Embodiments of the present invention provide the apparatus for determining the parameter of the RSRP threshold, performed by the first-type UE, including: the second processing module 61 configured to determine the bias parameter of the first-type UE to be a bias parameter corresponding to the RSRP threshold of the first-type UE according to the RSRP threshold of the first-type UE and the configuration information.

In some embodiments, the configuration information indicates that application scenario information corresponding to at least two application scenarios in individual application scenarios is mapped to different bias parameters.

Embodiments of the present invention provide the apparatus for determining the parameter of the RSRP threshold, performed by the first-type UE, including: the second processing module 61 configured to determine the bias parameter of the first-type UE to be a bias parameter corresponding to the application scenario information of the first-type UE according to the application scenario information of the first-type UE and the configuration information.

It should be noted that those skilled in the art can understand that the apparatus provided in the embodiments of the present invention may be performed alone or together with some apparatuses in the embodiments of the present invention or some apparatuses in the related technologies.

Regarding the apparatus in the above embodiments, specific manners in which each module performs operation(s) has been described in detail in the embodiments related to the method, and will not be described in detail here.

Embodiments of the present invention provide a communication device, including: a processor; and a memory for storing processor-executable instructions. The processor is configured to run the executable instructions to perform the method for determining a parameter of an RSRP threshold according to any embodiment of the present invention.

In an embodiment, the communication device may include, but not limited to, at least one of a core network device, an access device or a UE.

The processor may include various types of storage media, which are non-transitory computer storage media, and can continue to memorize and store information thereon after the communication device is powered off.

The processor may be connected to the memory through a bus for reading the executable program stored on the memory, and to perform, for example, at least one of the methods shown in FIG. 2 to FIG. 7.

Embodiments of the present invention further provide a computer storage medium. The computer storage medium stores a computer executable program. When the executable program is executed by a processor, the method for determining the parameter of the RSRP threshold of any embodiment of the present invention (e.g., at least one of the methods shown in FIGS. 2 to 7) is implemented.

Regarding the apparatus or the storage medium in the above embodiments, the specific manners in which each module performs operation(s) has been described in detail in the embodiments related to the method, and will not be described in detail here.

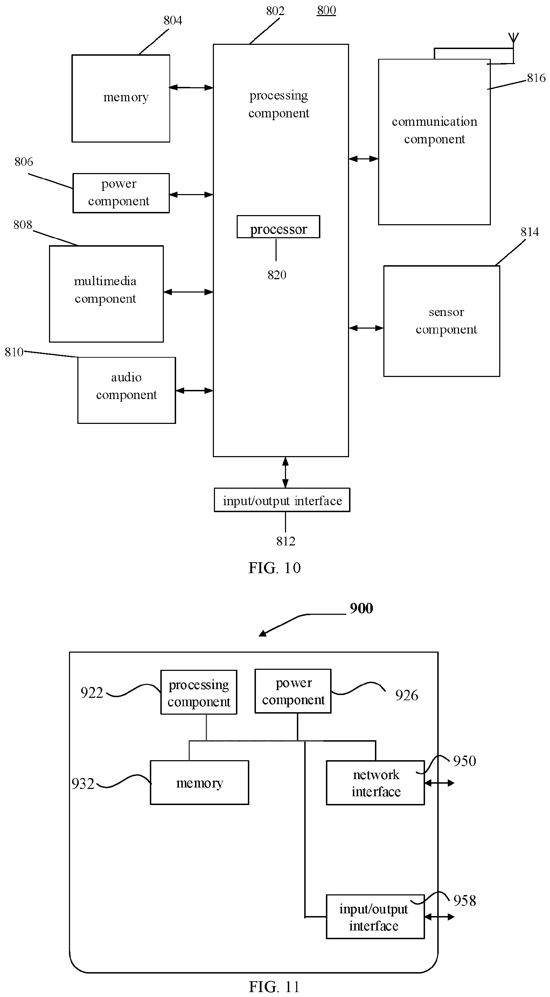

FIG. 10 is a block diagram showing a UE 800 according to an illustrative embodiment. For example, the UE 800 may be a mobile phone, a computer, a digital broadcast terminal, a messaging device, a game console, a tablet device, a medical device, a fitness device, a personal digital assistant, or the like.

Referring to FIG. 10, the UE 800 may include one or more of the following components: a processing component 802, a memory 804, a power component 806, a multimedia component 808, an audio component 810, an input/output (I/O) interface 812, a sensor component 814, and a communication component 816.

The processing component 802 typically controls overall operations of the UE 800, such as the operations associated with display, phone calls, data communications, camera operations, and recording operations. The processing component 802 may include one or more processors 820 to execute instructions to perform all or some of the steps in the above-described methods. Moreover, the processing component 802 may include one or more modules which facilitate the interaction between the processing component 802 and other components. For instance, the processing component 802 may include a multimedia module to facilitate the interaction between the multimedia component 808 and the processing component 802.

The memory 804 is configured to store various types of data to support the operation of the UE 800. Examples of such data include instructions for any applications or methods operated on the UE 800, contact data, phonebook data, messages, pictures, videos, etc. The memory 804 may be implemented using any type of volatile or non-volatile memory devices, or a combination thereof, such as a static random access memory (SRAM), an electrically erasable programmable read-only memory (EEPROM), an erasable programmable read-only memory (EPROM), a programmable read-only memory (PROM), a read-only memory (ROM), a magnetic memory, a flash memory, a magnetic disk or an optical disk.

The power component 806 provides power to various components of the UE 800. The power component 806 may include a power management system, one or more power sources, and any other components associated with the generation, management, and distribution of power in the UE 800.

The multimedia component 808 includes a screen providing an output interface between the UE 800 and the user. In some embodiments, the screen may include a liquid crystal display (LCD) and a touch panel (TP). If the screen includes the touch panel, the screen may be implemented as a touch screen to receive input signals from the user. The touch panel includes one or more touch sensors to sense touches, swipes, and gestures on the touch panel. The touch sensors may not only sense a boundary of a touch or swipe action, but also sense a duration and a pressure associated with the touch or swipe action. In some embodiments, the multimedia component 808 includes a front camera and/or a rear camera. The front camera and/or the rear camera may receive an external multimedia datum while the UE 800 is in an operation mode, such as a photographing mode or a video mode. Each of the front camera and the rear camera may be a fixed optical lens system or have focus and optical zoom capability.

The audio component 810 is configured to output and/or input audio signals. For example, the audio component 810 includes a microphone (MIC) configured to receive an external audio signal when the UE 800 is in an operation mode, such as a call mode, a recording mode, and a voice recognition mode. The received audio signal may be further stored in the memory 804 or transmitted via the communication component 816. In some embodiments, the audio component 810 further includes a speaker to output audio signals.

The I/O interface 812 provides an interface between the processing component 802 and peripheral interface modules, such as keyboards, click wheels, buttons, and the like. The buttons may include, but are not limited to, a home button, a volume button, a starting button, and a locking button.

The sensor component 814 includes one or more sensors to provide status assessments of various aspects of the UE 800. For instance, the sensor component 814 may detect an open/closed status of the UE 800, relative positioning of components, e.g., the display and the keypad, of the UE 800, a change in position of the UE 800 or a component of the UE 800, a presence or absence of user contact with the UE 800, an orientation or an acceleration/deceleration of the UE 800, and a change in temperature of the UE 800. The sensor component 814 may include a proximity sensor configured to detect the presence of nearby objects without any physical contact. The sensor component 814 may further include a light sensor, such as a CMOS or CCD image sensor, for use in imaging applications. In some embodiments, the sensor component 814 may further include an accelerometer sensor, a gyroscope sensor, a magnetic sensor, a pressure sensor, or a temperature sensor.

The communication component 816 is configured to facilitate communication, wired or wireless, between the UE 800 and other devices. The UE 800 may access a wireless network based on a communication standard, such as Wi-Fi, 4G, or 5G, or a combination thereof. In an illustrative embodiment, the communication component 816 receives a broadcast signal or broadcast associated information from an external broadcast management system via a broadcast channel. In an illustrative embodiment, the communication component 816 further includes a near field communication (NFC) module to facilitate short-range communications. For example, the NFC module may be implemented based on a radio frequency identifier (RFID) technology, an infrared data association (IrDA) technology, an ultra-wideband (UWB) technology, a Bluetooth (BT) technology, and other technologies.

In an illustrative embodiment, the UE 800 may be implemented with one or more of an application specific integrated circuits (ASIC), a digital signal processor (DSP), a digital signal processing device (DSPD), a programmable logic device (PLD), a field programmable gate array (FPGA), a controller, a micro-controller, a microprocessor, or other electronic elements, for performing the above-mentioned method.

In an illustrative embodiment, there is also provided a non-transitory computer readable storage medium including instructions, such as included in the memory 804, executable by the processor 820 in the UE 800, for completing the above-mentioned method. For example, the non-transitory computer-readable storage medium may be a ROM, a random access memory (RAM), a CD-ROM, a magnetic tape, a floppy disc, an optical data storage device, and the like.

As shown in FIG. 11, embodiment of the present invention provide a structure of a base station. For example, the base station 900 may be provided as a network device. Referring to FIG. 11, the base station 900 includes a processing component 922, which further includes one or more processors, and memory resources represented by a memory 932 for storing instructions executable by the processing component 922, such as an application program. The application program stored in the memory 932 may include one or more modules each corresponding to a set of instructions. In addition, the processing component 922 is configured to execute instructions to perform any method applied to the base station as described above.

The base station 900 may further include a power component 926 configured to perform power management of the base station 900, a wired or wireless network interface 950 configured to connect the base station 900 to a network, and an input/output (I/O) interface 958. The base station 900 may operate based on an operating system stored in the memory 932, such as Windows Server TM, Mac OS XTM, UnixTM, LinuxTM, FreeBSDTM, or the like.

Other embodiments of the present invention will be apparent to those skilled in the art from consideration of the specification and practice of the present invention disclosed here. The present invention is intended to cover any variations, uses, or adaptations of the present invention following the general principles thereof and including such departures from the present invention as come within known or customary practice in the art. It is intended that the specification and examples be considered as illustrative only, with a true scope and spirit of the present invention being indicated by the scope of the following claims.

It will be appreciated that the present invention is not limited to the exact construction that has been described above and illustrated in the accompanying drawings, and that various modifications and changes may be made without departing from the scope thereof. It is intended that the scope of the present invention only be limited by the scope of the appended claims.

## Claims

1. A method for determining a parameter of a reference signal received power (RSRP) threshold, performed by a network device, the method comprising:
determining a bias parameter of an RSRP threshold of a first-type user equipment (UE) according to configuration-related information of the first-type UE, wherein the first-type UE is a UE of which an antenna structure is reduced with respect to a second-type UE.

2. The method according to claim 1, wherein the first-type UE includes one of:
a UE of which a number of receiving antennas is smaller than a number of receiving antennas of the second-type UE in a first frequency range; or
a UE of which a number of antenna elements comprised in an antenna panel is smaller than that of the second-type UE in a second frequency range.

3. The method according to claim 1 or 2, wherein the configuration-related information of the first-type UE comprises at least one of:
a measurement resource of the first-type UE;
a frequency range in which the first-type UE is located;
an RSRP threshold type of the first-type UE; or
application scenario information used to determine an application scenario of the first-type UE.

4. The method according to claim 3, wherein determining the bias parameter of the RSRP threshold of the first-type UE according to the configuration-related information of the first-type UE comprises:
determining a same bias parameter according to different configuration-related information of the first-type UE; or
determining different bias parameters according to different configuration-related information of the first-type UE.

5. The method according to claim 4, wherein determining the same bias parameter according to different configuration-related information of the first-type UE comprises:
determining the same bias parameter according to at least two different parameters in the configuration-related information of the first-type UE.

6. The method according to claim 4, wherein determining different bias parameters according to different configuration-related information of the first-type UE comprises:
determining the bias parameter to be a first bias parameter in response to the measurement resource of the first-type UE being a channel state information-reference signal (CSI-RS); or
determining the bias parameter to be a second bias parameter in response to the measurement resource of the first-type UE being a synchronization signal block (SSB).

7. The method according to claim 4, wherein determining different bias parameters according to different configuration-related information of the first-type UE comprises:
determining the bias parameter to be a third bias parameter in response to the frequency range in which the first-type UE is located being the first frequency range; or
determining the bias parameter to be a fourth bias parameter in response to the frequency range in which the first-type UE is located being the second frequency range.

8. The method according to claim 4, wherein determining different bias parameters according to different configuration-related information of the first-type UE comprises:
determining different bias parameters for at least two RSRP thresholds in each RSRP threshold type of the first-type UE, wherein the RSRP threshold comprises at least one of:
an RSRP threshold of an SSB (rsrp-ThresholdSSB), used to allow a UE to determine whether it is allowed to select a physical random access channel (PRACH) resource corresponding to an SSB of which an RSRP is greater than the rsrp-ThresholdSSB to perform an operation;
an RSRP threshold of a CSI-RS (rsrp-ThresholdCSI-RS), used to allow a UE to determine whether it is allowed to select a random access resource of which an RSRP is greater than the rsrp-ThresholdCSI-RS to perform an operation of beam recovery;
an RSRP threshold of an SSB for random access (msgA-RSRP-ThresholdSSB), used to allow a UE to determine whether it is allowed to select a PRACH resource of message A (MsgA) corresponding to an SSB of which an RSRP is greater than the msgA-RSRP-ThresholdSSB to perform an operation;
an RSRP threshold for random access (msgA-RSRP-Threshold), used to allow a UE to determine whether to select a 2-step random access type to perform random access, and/or determine whether it is allowed to select a random access channel (RACH) resource of which an RSRP is greater than the msgA-RSRP-Threshold to perform random access;
an RSRP threshold for beam failure recovery (rsrp-ThresholdBFR), used to allow a UE to determine whether it is allowed to select a RACH resource of which an RSRP is greater than the rsrp-ThresholdBFR to perform random access during beam failure recovery;
an RSRP threshold for small data transmission (SDT) initiation, used to determine whether to initiate the SDT;
an RSRP threshold for carrier selection of SDT, used to determine whether to perform SDT on a supplementary uplink (SUL) or a normal uplink (NUL);
an RSRP threshold for RACH type selection of SDT, used to determine whether to use 2 -step RACH SDT or 4-step RACH SDT; or
an RSRP threshold for message 3 (Msg.3) coverage enhancement, used to determine whether to use a coverage enhancement operation for Msg.3.

9. The method according to claim 4, wherein determining different bias parameters according to different configuration-related information of the first-type UE comprises:
determining different bias parameters for application scenario information corresponding to at least two application scenarios in individual application scenarios of the first-type UE, wherein the application scenario comprises at least one of:
a random access scenario, wherein the random access scenario comprises an application scenario where one of rsrp-ThresholdSSB, msgA-RSRP-ThresholdSSB, or msgA-RSRP-Threshold is used;
a beam recovery scenario, wherein the beam recovery scenario comprises an application scenario where one of rsrp-ThresholdCSI-RS or rsrp-ThresholdBFR is used;
a small data transmission (SDT) scenario, wherein the small data transmission scenario comprises an application scenario where one of an RSRP threshold for SDT initiation, an RSRP threshold for carrier selection of SDT, or an RSRP threshold for RACH type selection of SDT is used; or
a coverage enhancement scenario, wherein the coverage enhancement scenario comprises an application scenario where an RSRP threshold for Msg.3 coverage enhancement is used.

10. The method according to claim 4, wherein determining the bias parameter of the RSRP threshold of the first-type UE comprises:
determining the bias parameter according to a communication protocol; or
determining the bias parameter according to a pre-configuration.

11. The method according to any one of claims 3 to 10, further comprising:
sending configuration information, wherein the configuration information indicates the bias parameter corresponding to the configuration-related information of the first-type UE.

12. A method for determining a parameter of a reference signal received power (RSRP) threshold, performed by a first-type user equipment (UE), the method comprising:
determining a bias parameter of an RSRP threshold of the first-type UE according to configuration-related information of the first-type UE, wherein the first-type UE is a LTE of which an antenna structure is reduced with respect to a second-type UE.

13. The method according to claim 12, further comprising:
determining an RSRP threshold of the first-type UE according to an RSRP threshold of the second-type UE and the bias parameter of the first-type UE.

14. The method according to claim 12 or 13, further comprising:
receiving configuration information, wherein the configuration information indicates the configuration-related information of the first-type UE and a corresponding bias parameter;
determining the bias parameter of the RSRP threshold of the first-type UE according to the configuration-related information of the first-type UE comprises:
determining the bias parameter of the first-type UE according to the configuration-related information of the first-type UE and the configuration information.

15. The method according to claim 12 or 13, wherein determining the bias parameter of the RSRP threshold of the first-type UE according to the configuration-related information of the first-type UE comprises:
determining the bias parameter corresponding to the configuration-related information of the first-type UE according to a communication protocol and the configuration-related information of the first-type UE.

16. The method according to claim 12 or 13, wherein the first-type UE comprises one of:
a UE of which a number of receiving antennas is smaller than a number of receiving antennas of the second-type UE in a first frequency range; or
a UE of which a number of antenna elements comprised in an antenna panel is smaller than that of the second-type UE in a second frequency range.

17. The method according to claim 12 or 13, wherein the configuration-related information of the first-type UE comprises at least one of:
a measurement resource of the first-type UE;
a frequency range in which the first-type UE is located;
an RSRP threshold type of the first-type UE; or
application scenario information used to determine an application scenario of the first-type UE.

18. The method according to claim 12 or 13, wherein
the configuration information indicates that different configuration-related information is mapped to a same bias parameter; or
the configuration information indicates that different configuration-related information is mapped to different bias parameters.

19. The method according to claim 18, wherein the configuration information indicates that at least two different parameters in the configuration-related information of the first-type UE correspond to the same bias parameter.

20. The method according to claim 14, wherein the configuration information indicates at least one of:
a measurement resource of a channel state information-reference signal (CSI-RS) corresponding to a first bias parameter; or
a measurement resource of a synchronization signal block (SSB) corresponding to a second bias parameter;
wherein determining the bias parameter of the first-type UE according to the configuration-related information of the first-type UE and the configuration information comprises one of:
determining the bias parameter of the first-type UE to be the first bias parameter according to the configuration information and the measurement resource of the first-type UE being the CSI-RS; or
determining the bias parameter of the first-type UE to be the second bias parameter according to the configuration information and the measurement resource of the first-type UE being the SSB.

21. The method according to claim 20, wherein determining the RSRP threshold of the first-type UE according to the RSRP threshold of the second-type UE and the bias parameter of the first-type UE comprises one of:
determining the RSRP threshold of the first-type UE of which the measurement resource is the CSI-RS according to the RSRP threshold of the second-type UE and the first bias parameter; or
determining the RSRP threshold of the first-type UE of which the measurement resource is the SSB according to the RSRP threshold of the second-type UE and the second bias parameter.

22. The method according to claim 14, wherein the configuration information indicates at least one of:
a first frequency range corresponding to a third bias parameter; or
a second frequency range corresponding to a fourth bias parameter;
wherein determining the bias parameter of the first-type UE according to the configuration-related information of the first-type UE and the configuration information comprises one of:
determining the bias parameter of the first-type UE to be the third bias parameter according to the configuration information and a frequency range of the first-type UE being the first frequency range; or
determining the bias parameter of the first-type UE to be the fourth bias parameter according to the configuration information and a frequency range of the first-type UE being the second frequency range.

23. The method according to claim 22, wherein determining the RSRP threshold of the first-type UE according to the RSRP threshold of the second-type UE and the bias parameter of the first-type UE comprises one of:
determining the RSRP threshold of the first-type UE of which the frequency range is the first frequency range according to the RSRP threshold of the second-type UE and the third bias parameter; or
determining the RSRP threshold of the first-type UE of which the frequency range is the second frequency range according to the RSRP threshold of the second-type UE and the fourth bias parameter.

24. The method according to claim 14, wherein the configuration information indicates that at least two RSRP thresholds in each RSRP threshold type are mapped to different bias parameters;
wherein determining the bias parameter of the first-type UE according to the configuration related information of the first-type UE and the configuration information comprises:
determining the bias parameter of the first-type UE to be a bias parameter corresponding to the RSRP threshold of the first-type UE according to the RSRP threshold of the first-type UE and the configuration information.

25. The method according to claim 14, wherein the configuration information indicates that application scenario information corresponding to at least two application scenarios in individual application scenarios is mapped to different bias parameters;
wherein determining the bias parameter of the first-type UE according to the configuration related information of the first-type UE and the configuration information comprises:
determining the bias parameter of the first-type UE to be a bias parameter corresponding to the application scenario information of the first-type UE according to the application scenario information of the first-type UE and the configuration information.

26. An apparatus for determining a parameter of a reference signal received power (RSRP) threshold, applied to a network device, comprising:
a first processing module configured to determine a bias parameter of an RSRP threshold of a first-type user equipment (UE) according to configuration-related information of the first-type UE, wherein the first-type UE is a UE of which an antenna structure is reduced with respect to a second-type UE.

27. An apparatus for determining a parameter of a reference signal received power (RSRP) threshold, applied to a first-type user equipment (UE), comprising:
a second processing module configured to determine a bias parameter of an RSRP threshold of a first-type user equipment (UE) according to configuration-related information of the first-type UE, wherein the first-type UE is a UE of which an antenna structure is reduced with respect to a second-type UE.

28. A communication device, comprising:
a processor; and
a memory for storing executable instructions that, when executed by the processor, cause the method for determining the parameter of the RSRP threshold according to any one of claims 1 to 11 or any one of claims 12 to 25 to be implemented.

29. A computer storage medium having stored therein a computer-executable program that, when executed by a processor, causes the method for determining the parameter of the RSRP threshold according to any one of claims 1 to 11 or any one of claims 12 to 25 to be implemented.
